# EUROPEAN PATENT APPLICATION

(11) **EP 2 544 093 A1**
(43) Date of publication of application: **09.01.2013**
(21) Application number: 11750489.4
(22) Date of filing: 15.02.2011
(51) Int. Cl.: G06F 13/00, H04M 1/00, H04M 11/00, H04Q 9/00

(54) **COORDINATED OPERATION APPARATUS, COORDINATED OPERATION METHOD, COORDINATED OPERATION CONTROL PROGRAM AND APPARATUS COORDINATION SYSTEM**

(30) Priority: 02.03.2010 JP 2010044951
(71) Applicant: NEC Corporation, Tokyo 108-8001 (JP)
(72) Inventor: AOKI, Noriyuki, Tokyo 108-8001 (JP); NAGAI, Michio, Tokyo 108-8001 (JP)
(74) Representative: Vossius & Partner
(86) International application number: PCT/JP2011/053607
(87) International publication number: WO 2011/108377

(57) **Abstract**

In order to cooperatively operate a plurality of devices and use a relative relationship between these devices, a device cooperation system includes a first device which has a first transmission function to transmit first information and a second device which has a first relative relationship with the first device, has a first reception function to receive the first information, and generates third information based on the first relative relationship, the first information, and second information.

## Description

### Technical field

The present invention relates to a cooperative operation device which realizes a predetermined function by operating in cooperation with another device, a cooperative operation method, a cooperative operation control program, and a device cooperation system in which a plurality of devices operate in cooperation with each other to realize a predetermined function.

### Background art

In recent years, an electronic device (hereinafter, simply referred to as a "device") such as a portable phone, a personal computer (hereinafter, referred to as a "PC"), or the like has various additional functions such as an image photographing function, a music reproducing/recording function, and the like in addition to a communication function, an information processing function, and the like that are basic functions of the device. The additional function is becoming further diversified and complicated.

When each device has various functions, the convenience for the user is improved. However, when the number of functions provided in the device is increased, there is a possibility that the cost, the weight, the size, and the power consumption of the device are increased. Therefore, if a function that is provided in another device but not provided in the device can be used by the device as needed basis, efficiency can be greatly improved.

Further, if a function provided in a neighboring device can be used by the device although the device has the same function, a new effect that cannot be obtained by only one device may be obtained. For example, it is assumed that a device A and a device B have respective image photographing functions. When the device A takes an image by itself, only an image X taken by the device A is obtained. However, the device A and the device B can take the image at a different position or at a different angle at the same time. By using this, a new effect can be obtained. Namely, when the device A makes the device B take an image Y and obtains the image Y, it can obtain new information for example, an image Z obtained by combining the image X and the image Y or the like, from the image X and the image Y.

Various systems in which a plurality of devices operate in cooperation with each other in order to obtain a combined result are disclosed (refer to for example, patent documents 1 and 2). A composite service providing apparatus described in patent document 1 makes the devices connected to respective plurality of networks operate in cooperation with each other and provide a composite service.

In a voice communication system disclosed in patent document 2, a web browser terminal and a PC operate in cooperation with each other and whereby, when the web browser terminal receives a call, a user can smoothly respond it.

As a specific example of a device cooperation system, there is a system in which an apparatus having an image photographing function and an apparatus having a voice recording function operate in cooperation with each other (reference to, for example, patent document 3). In an electronic camera system disclosed in patent document 3, an image photographed by an electronic still camera is associated with a voice recorded by a portable telephone set as a voice memorandum and it is recorded.

There is a sound reproduction system which uses a plurality of portable terminal apparatuses having a sound reproduction function (reference to, for example patent document 4). In the sound reproduction system described in patent document 4, sound data is distributed to each of the plurality of portable terminal apparatuses and each portable terminal apparatus reproduces the voice.

A sound image localization mobile communication system in which the sound image of the communication voice can be localized at an azimuth for communication with a communication partner is disclosed (reference to, for example patent document 5).

A network system in which a plurality of mobile apparatuses having a sensor function operate in cooperation with each other is disclosed (reference to, for example patent document 6). In the network system disclosed in patent document 6, the plurality of mobile apparatuses share sensor information (photographed image), search for a target, detect it, and track it.

### Prior art document

patent document 1: Japanese Patent Application Laid-Open No. 2002-237829 (page 3 and Fig. 1)
patent document 2: Japanese Patent Application Laid-Open No. 2005-295149 (pages 6 to 7 and Fig. 1)
patent document 3: Japanese Patent Application Laid-Open No. 2004-96165 (pages 11 to 12 and Fig. 1)
patent document 4: Japanese Patent Application Laid-Open No. 2003-47098 (page 15 and Fig. 29)
patent document 5: Japanese Patent Application Laid-Open No. 2007-13407 (pages 9 to 10 and Fig. 1)
patent document 6: Japanese Patent Application Laid-Open No. 2006-344075 (pages 16 to 18 and Figs. 10 to 12)

### Brief summary of the invention

### Problems to be solved by the invention

In technology described in patent documents 1 and 2, the devices operate in cooperation with each other. In this case, the devices separately exist. However, this feature is not utilized. Namely, although the devices operate in cooperation with each other, the operations of all the functions operated in each device are the same as those of all the functions when each device operates as the stand-alone device. Thus, in the technology described in patent documents 1 and 2, there is a problem in which the relative relationship between the devices is not taken into the consideration and not used although the plurality of devices operate in cooperation with each other.

In the technology described in patent document 3, a shutter of a camera is remotely operated by a portable phone. Therefore, in this point, we can say that the devices cooperatively operate. However, the portable phone merely transmits a photographing instruction to the camera unilaterally and the camera performs only a photographing operation according to the instruction. Thus, the technology described in patent document 3 has a problem in which the relative relationship between the portable phone and the camera is not taken into consideration and not used.

In the technology described in patent document 4, each of the plurality of portable terminal apparatuses independently reproduces the voice and as a whole, a predetermined acoustic effect is obtained. Therefore, in this point, a predetermined effect is obtained by the cooperation of the devices. However, when the plurality of portable terminal apparatuses are arbitrarily arranged, the desired acoustic effect is not always obtained. Therefore, in the technology described in patent document 4, when the voice is distributed to all the portable terminal apparatuses and reproduced, in order to obtain the desired acoustic effect, all the portable terminal apparatuses have to be correctly arranged at the predetermined position such as front/back position, left/right position, or the like. If the voice can be distributed by considering the positional relationships between the plurality of portable terminal apparatuses, the cooperation of the portable terminal apparatuses for obtaining the predetermined acoustic effect will be easily obtained. However, in the technology described in patent document 4, because the voice cannot be distributed by taking the positional relationship between the portable terminal apparatuses into consideration, there is a problem in which the accurate arrangement of the portable terminal apparatuses is required.

In the technology described in patent document 5, a mobile communication terminal receives a voice transmitted from a communication partner and achieves the sound image localization of the voice at the azimuth of the communication partner's terminal. Therefore, in this point, a relative positional relationship between the mobile communication terminal and the communication partner is used. However, new information using information held by the mobile communication terminal itself and the received voice or the like is not produced. In other words, the technology described in patent document 5 has a problem in which the cooperative operation in which the relative relationship between the transmission side terminal and the partner terminal is taken into consideration and used cannot be performed.

In the technology described in patent document 6, sensor information obtained by a plurality of mobile apparatuses is shared. However, the relative relationship between the plurality of mobile apparatuses cannot be taken into consideration and cannot be used. Therefore, the plurality of mobile apparatuses move completely independently from each other. Accordingly, there is a problem in which the plurality of mobile apparatuses cannot perform an efficient operation in which the mobile apparatuses move by using information about the positional relationship between them, find out a target early, and trace it.

The present invention is made in view of the above technical problem. An object of the present invention is to provide a cooperative operation device which operates in cooperation with another device and uses a relative relationship with the another device, a cooperative operation method, and a cooperative operation device control program.

An object of the present invention is to provide a device cooperation system in which a plurality of devices operate in cooperation with each other and a relative relationship between these devices is used.

### Means for solving the problems

A device cooperation system of the present invention includes a first device which has a first transmission function to transmit first information and a second device which has a first relative relationship with the first device, has a first reception function to receive the first information, and generates third information based on the first relative relationship, the first information, and second information.

A device cooperation system of the present invention includes a first device which has a first transmission function to transmit first information, a second device which is arranged so as to provide a first relative relationship with the first device and has a second transmission function to transmit second information, and a third device which is arranged so as to provide a second relative relationship with the second device and a third relative relationship with the first device, has a first reception function to receive the first information and the second information, and generates third information based on at least one among the first relative relationship, the second relative relationship, and the third relative relationship, as well as the first information and the second information.

A cooperative operation device of the present invention includes first reception means which have a first relative relationship with a first device having a first transmission function to transmit first information and receive the first information and information generation means which generate third information based on the first relative relationship, the first information, and second information.

A cooperative operation device of the present invention includes first reception means which have a first relative relationship with a first device having a first transmission function to transmit first information, have a second relative relationship with a second device having a second transmission function to transmit second information, have a third relative relationship with the first device, and receive the first information and the second information and information generation means which generate third information based on at least one among the first relative relationship, the second relative relationship, and the third relative relationship, as well as the first information and the second information.

A device cooperation method of the present invention comprises transmitting first information from a first device, receiving the first information by using a second device which has a first relative relationship with the first device, and generating third information based on the first relative relationship, the first information, and second information.

A device cooperation method of the present invention comprises transmitting first information from a first device, transmitting second information from a second device which has a first relative relationship with the first device, receiving the first information and the second information by using a third device arranged so as to have a second relative relationship with the second device and a third relative relationship with the first device, and generating third information based on at least one among the first relative relationship, the second relative relationship, and the third relative relationship, as well as the first information and the second information.

A cooperative device control program of the present invention causes a computer provided in a second device which has a first relative relationship with a first device that transmits first information to function as means for receiving the first information and means for generating third information based on the first relative relationship, the first information and second information.

A cooperative device control program of the present invention causes a computer provided in a third device which has a second relative relationship with a first device which transmits first information, a first relative relationship with a first device, and a third relative relationship with a second device that transmits second information to function as means for receiving the first information and the second information and means for generating third information based on at least one among the first relative relationship, the second relative relationship, and the third relative relationship, as well as the first information and the second information.

### Effect of the invention

The cooperative operation device, the cooperative operation method, and the cooperative operation device control program of the present invention have the effects in which the cooperative operation device can operate in cooperation with another device and a result using a relative positional relationship with the another devices can be obtained.

The device cooperation system of the present invention has an effect in which a plurality of devices can operate in cooperation with each other and a result using a relative positional relationship between these devices can be obtained.

### Brief description of the drawings

Fig. 1 is a block diagram showing a configuration of a device cooperation system of a first exemplary embodiment of the present invention.
Fig. 2 is a block diagram showing a configuration of a first modification example of a device cooperation system of a first exemplary embodiment of the present invention.
Fig. 3 is an example of a flowchart when performing a process of a second device by using software in a device cooperation system of a first exemplary embodiment of the present invention.
Fig. 4 is a block diagram showing a configuration of a second modification example of a device cooperation system of a first exemplary embodiment of the present invention.
Fig. 5 is an example of a flowchart when performing a process of a third device by using software in a second modification example of a device cooperation system of a first exemplary embodiment of the present invention.
Fig. 6 is a block diagram showing a configuration of a stereophonic recording system of a second exemplary embodiment of the present invention.
Fig. 7 is a block diagram showing a configuration of a first modification example of a stereophonic recording system of a second exemplary embodiment of the present invention.
Fig. 8 is a block diagram showing a configuration of a second modification example of a stereophonic recording system of a second exemplary embodiment of the present invention.
Fig. 9 is a block diagram showing a configuration of a stereophonic voice reproduction system of a third exemplary embodiment of the present invention.
Fig. 10 is a block diagram showing a configuration of a panoramic image photographing system of a fourth exemplary embodiment of the present invention.
Fig. 11 is a block diagram showing a configuration of an image voice complex system of a fifth exemplary embodiment of the present invention.
Fig. 12 is a block diagram showing a configuration of a cooperative navigation system of a sixth exemplary embodiment of the present invention.
Fig. 13 is a block diagram showing a configuration of a distance estimation system of a seventh exemplary embodiment of the present invention.
Fig. 14A is a block diagram showing a configuration of a first modification example of a distance estimation system of a seventh exemplary embodiment of the present invention.
Fig. 14B is a figure showing an example of an image range of a device 701 in a whole image 712 of a seventh exemplary embodiment of the present invention.
Fig. 15 is a block diagram showing a configuration of a second modification example of a distance estimation system of a seventh exemplary embodiment of the present invention.
Fig. 16 is a block diagram showing a configuration of an image sharing system of an eighth exemplary embodiment of the present invention.
Fig. 17 is a block diagram showing a configuration of an image correction system of a ninth exemplary embodiment of the present invention.
Fig. 18A is a block diagram showing a configuration of an object discrimination system of a tenth exemplary embodiment of the present invention.
Fig. 18B shows an example of an image displayed in an image inputting/recording apparatus shown in Fig. 18A.
Fig. 19A is a block diagram showing a configuration of an object discrimination system of a tenth exemplary embodiment of the present invention.
Fig. 19B shows an example of an image displayed in an image inputting/recording apparatus shown in Fig. 19A.

### Mode for carrying out the invention

### (First exemplary embodiment)

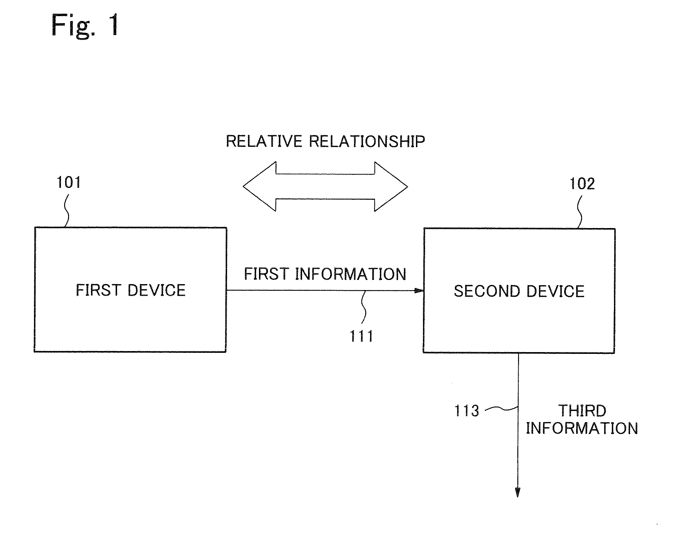

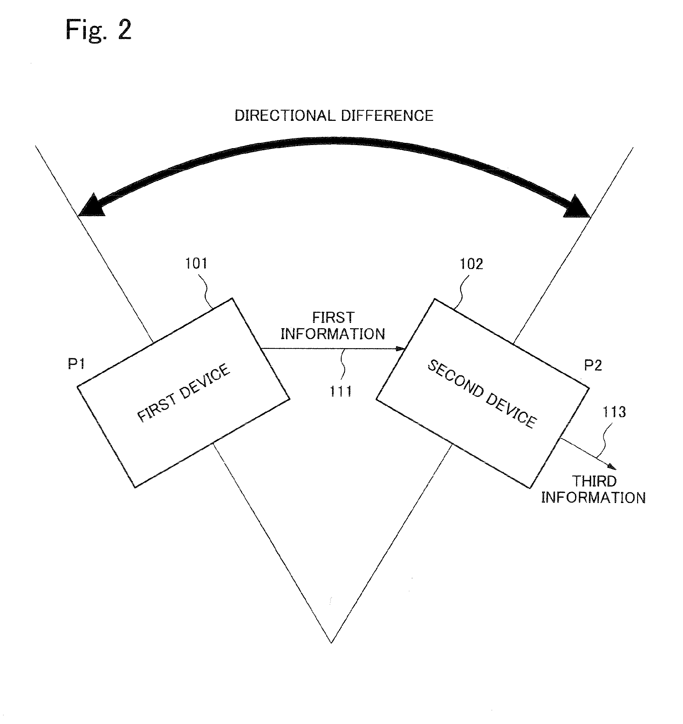

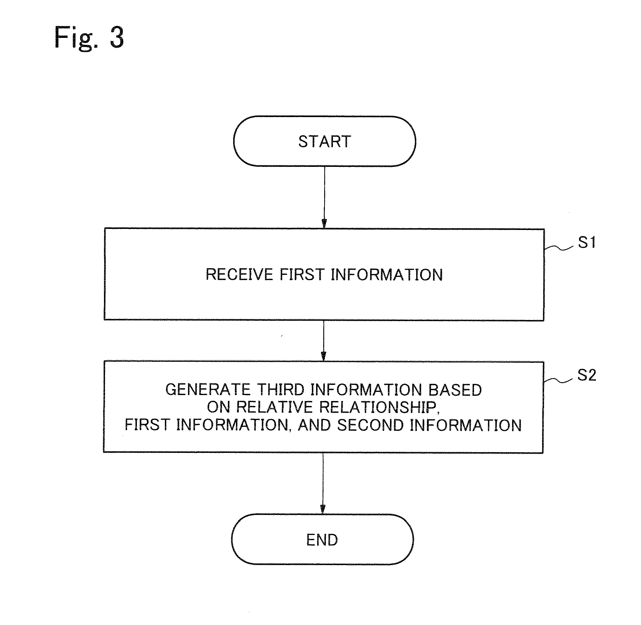

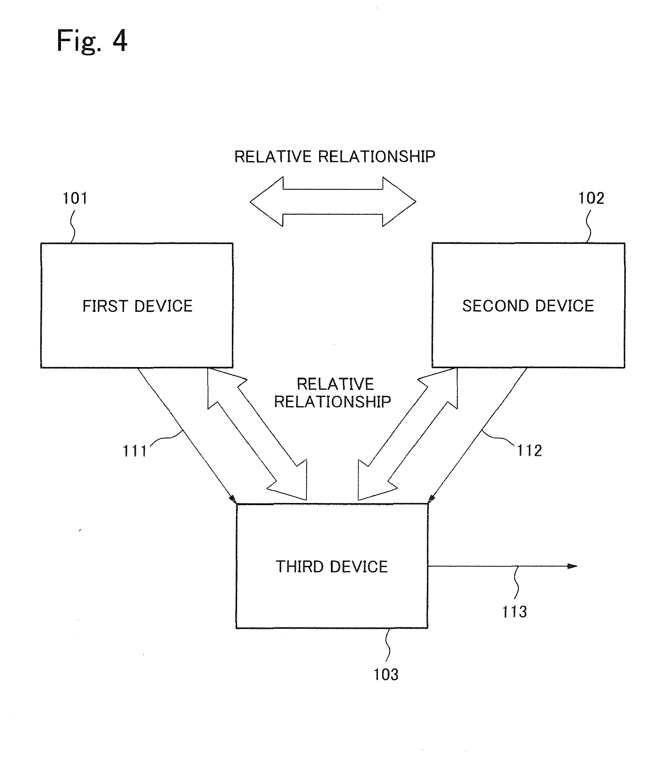

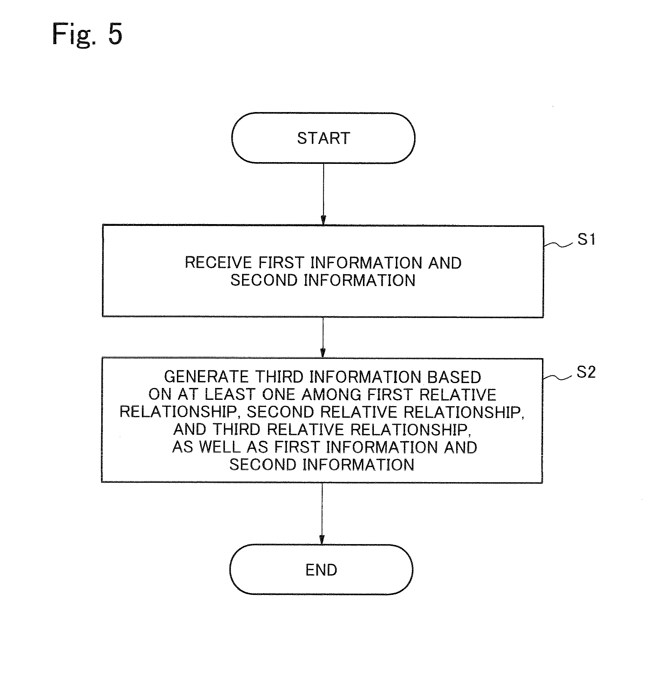

A configuration and operation of a device cooperation system of a first exemplary embodiment of the present invention will be described by using Fig. 1. Fig. 1 is a block diagram showing a configuration of the device cooperation system of the first exemplary embodiment. Fig. 2 and Fig. 4 are block diagrams showing configurations of a first modification example and a second modification example of the device cooperation system of the first exemplary embodiment, respectively. Fig. 3 is an example of a flowchart when performing a process of a second device by using software in the device cooperation system of the first exemplary embodiment. Fig. 5 is an example of a flowchart when performing a process of a third device by using software in a second modification example of a device cooperation system of the first exemplary embodiment.

The device cooperation system of the exemplary embodiment comprises a first device 101 and a second device 102. The first device 101 and the second device 102 are arranged so as to have a predetermined relative positional relationship or an arbitrary positional relationship.

First information 111 is information provided in the first device 101. For example, the first device 101 may have a first function and a first information generation function to generate the first information 111 as a process result of the first function. The first device 101 has a first transmission function to transmit the first information 111.

Second information 112 is information provided in the second device 102. For example, the second device 102 may have a second function and a second information generation function to generate the second information (not shown) as a process result of the second function.

The above-mentioned "information" is information provided in the first device 101 and the second device 102. The "function" means inputting some signal and a state from the outside and performing a predetermined process. The "information" may be output information outputted as the process result. The form of the information is not limited in particular. The information may be represented by an analog signal or may be represented by a digital signal. The format of the information is arbitrary.

The function is for example, a voice input function and the information is voice information generated based on the inputted voice. The form of the voice information may be the analog signal obtained by only converting the voice into the electrical signal. Further, the form of the voice information may be digital information composed of a set of digitized digital values after sampling the voice or coded information obtained by applying a signal processing such as encryption, compression, or the like to the digital information.

An image input function, a measurement function to measure an ambient environment such as temperature, pressure, or illumination intensity, or the like is an example of another function.

The "transmission" means sending the information to a destination-side device. Accordingly, the means for transmission are not limited in particular.

For example, the information may be transmitted in a form of the electrical signal by using a cable or may be transmitted as a wireless signal. A procedure for the transmission is not limited in particular.

The first device 101 generates the first information by the first function at a position at which the first device 101 is located. The second device 102 generates the second information by the second function at a position at which the second device 102 is located. There is a predetermined relative relationship between the first device 101 and the second device 102 that depends on the arrangement of the first device 101 and the second device 102. The relative relationship is for example, a "distance" that is defined as a positional difference between the positions at which the devices are located, a "directional difference" that is a difference between the directions which the predetermined planes of the devices face, or the like. In case of the distance, a length between predetermined reference points (not shown) that are set to the first device 101 and the second device 102 may be used as the distance. In case of the directional difference, as shown in Fig. 2, an angle between the normal lines of predetermined planes P1 and P2 that are set to the first device 101 and the second device 102 may be used as the directional difference.

The second device receives the first information 111 from the first device 101. The second device generates third information 113 based on the first information 111, the second information, and the relative positional relationship between the first device 101 and the second device 102.

A method for acquiring the relative relationship is not limited. For example, when the distance between the first device 101 and the second device 102 is used as the relative relationship, the relative relationship can be obtained as follows. First, position information on the first device 101 is transmitted from the first device 101 to the second device 102. The second device 102 acquires the position information on the second device 102. The second device 102 calculates the distance between the first device 101 and the second device 102 from the difference between the position information on the first device 101 and the position information on the second device 102. The GPS (Global Positioning System) or the like can be used for obtaining the position information. Further, the distance can be estimated by using a method shown in a seventh exemplary embodiment as an example.

When the relative relationship is the directional difference between the first device 101 and the second device 102, the relative relationship can be obtained as follows. First, direction information on the first device 101 is transmitted from the first device 101 to the second device 102. The second device 10 acquires the direction information on the second device 102. The second device 102 obtains the directional difference between the first device and second device 102 from the difference between the direction information on the first device 101 and the direction information on the second device 102. A geomagnetism sensor or the like can be used for acquiring the direction information.

Not only the position or the angle but also a relationship between the attribute of the first device 101 and the attribute of the second device 102 may be used as the "relative relationship". The attribute is for example, a physical parameter. Specifically, the first device 101 and the second device 102 have the following attributes.
1) the weight of the first device 101 and the weight of the second device 102
2) the pressure received by the predetermined plane of the first device 101 and the pressure received by the predetermined plane of the second device 102
3) the temperature of the first device 101 and the temperature of the second device 102
4) the illumination intensity on the predetermined plane of the first device 101 and the illumination intensity on the predetermined plane of the second device 102

In other words, the "relative relationship" in the exemplary embodiment is the difference between the predetermined states that can be expressed by a numerical value. Therefore, the "relative relationship" in the exemplary embodiment is not limited to the "distance", an "angle difference", and the "attribute" described above as an example.

As described above, the device cooperation system of the exemplary embodiment generates new information based on the information generated by each of the devices which have the relative positional relationship and the relative relationship. Therefore, the device cooperation system has an effect in which information using the relative positional relationship between the devices can be obtained.

Hereinafter, a system in which a plurality of devices which have the relative relationship between them operate in cooperation with each other and information is generated based on information generated by each of the plurality of devices and the relative relationship between the devices is called a "device cooperation system".

A process performed by the second device 102 can be realized through a software process performed by a computer incorporated in the second device 102. Fig. 3 is an example of a flowchart when the second device 102 performs the process by using software. The second device 102 receives the first information 111 (step S1) and generates the third information 113 based on the relative relationship, the first information 111, and the second information 112 (step S2).

As shown in Fig. 4, the function to generate the third information may be provided in the third device 103 instead of the second device 102.

In the device cooperation system shown in Fig. 4, there are three relative positional relationships between the devices. Namely, there are three relative positional relationships: the relative positional relationship between the first device 101 and the second device 102 (first relative positional relationship), the relative positional relationship between the second device 102 and the third device 103 (second relative positional relationship), and the relative positional relationship between the third device 103 and the first device 101 (third relative positional relationship).

The third device 103 receives the first information 111 from the first device 101 and receives the second information 112 from the second device 102. The third device 103 generates the third information 113 based on the first information 111, the second information 112, and at least one relative positional relationship among the first relative positional relationship, the second relative positional relationship, and the third relative positional relationship.

The process performed by the third device 103 can be realized through a software process performed by the computer incorporated in the third device 103. Fig. 5 is an example of a flowchart when the third device 103 performs the process by using software. The third device 103 receives the first information 111 and the second information 112 (step S1). The third device 103 generates the third information 113 based on the relative relationship, the first information 111, and the second information 112 (step S2). Here, the relative relationship means at least one relative positional relationship among the first relative positional relationship, the second relative positional relationship, and the third relative positional relationship.

### (Second exemplary embodiment)

The specific exemplary embodiment of the present invention will be described. As an example of the device cooperation system, there is a stereophonic recording system in which two voice input apparatuses and two voice recording apparatuses operate in cooperation with each other and stereophonic recording is achieved.

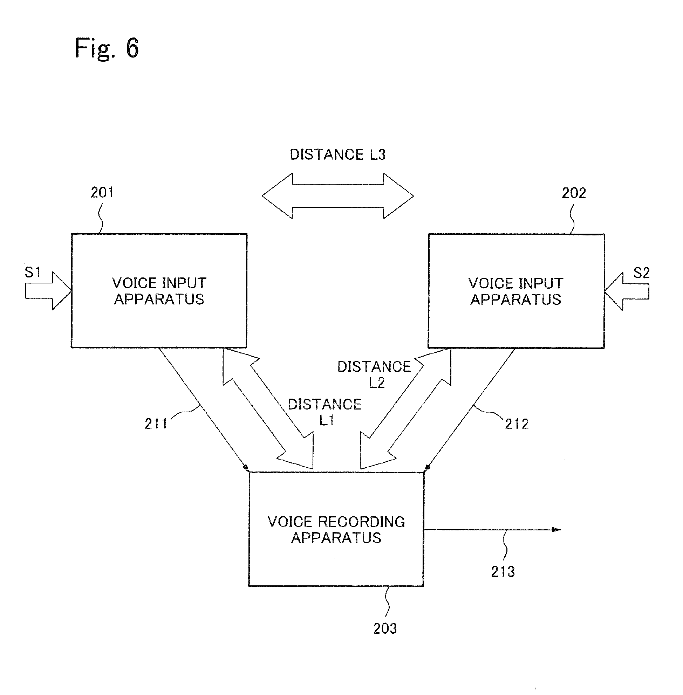

Fig. 6 is a block diagram showing a configuration of the stereophonic recording system of the second exemplary embodiment of the present invention. The stereophonic recording system comprises a voice input apparatus 201, a voice input apparatus 202, and a voice recording apparatus 203.

The "voice input apparatus" may have only a voice input function and a voice information output function. Therefore, a common microphone which just converts the external voice into an electrical signal can be used as the voice input apparatus. Further, it may have a recording function in addition to the voice input function. Accordingly, the voice input apparatus may be a voice recorder, or a portable telephone set or a PC that has a voice input recording function.

The "voice recording apparatus" may have only the recording function and a predetermined processing function. Accordingly, the portable telephone set or the PC that includes recording means is used as the voice recording apparatus and a process required for the voice may be performed by using software.

The voice input apparatus 201, the voice input apparatus 202, and the voice recording apparatus 203 are arranged at a predetermined position or an arbitrary position. Where L1 is the distance between the voice input apparatus 201 and the voice recording apparatus 203, L2 is the distance between the voice input apparatus 202 and the voice recording apparatus 203, and L3 is the distance between the voice input apparatus 201 and the voice input apparatus 202.

The distances between three apparatuses: the voice input apparatus 201, the voice input apparatus 202, and the voice recording apparatus 203 are measured or detected by a predetermined method. For example, each of the voice input apparatus 201, the voice input apparatus 202, and the voice recording apparatus 203 obtains the position information thereon by using the GPS, informs the other apparatuses of the obtained position information, and calculates the difference between the position information, and whereby, each of the voice input apparatus 201, the voice input apparatus 202, and the voice recording apparatus 203 may measure the distance between them. Further, the distance can be estimated by using a method shown in a seventh exemplary embodiment as an example.

A method for discriminating the positions, a right side position and a left side position of the voice recording apparatus 203, at which the voice input apparatus 201 and the voice input apparatus 202 are located is not limited in particular. For example, a method in which the voice recording apparatus 203 acquires the position information from the voice input apparatus 201 and the voice input apparatus 202, compares these information with the position information on the voice recording apparatus 203, and discriminates the positions at which the voice input apparatus 201 and the voice input apparatus 202 are located may be used. Further, a user of the voice recording apparatus 203 may input the information about the positional relationships between the voice input apparatus 201, the voice input apparatus 202, and the voice recording apparatus 203 by using a predetermined method.

The voice input apparatus 201 and the voice input apparatus 202 have the voice input function. The voice input apparatus 201 and the voice input apparatus 202 input surrounding voices S1 and S2 and transmit voice signals 211 and 212 to the voice recording apparatus 203, respectively. When the voice input function has directivity, the information about the directivity, that are information on directions D1 and D2 which the voice input functions face, may be transmitted from the voice input apparatus 201 and the voice input apparatus 202 to the voice recording apparatus 203.

Voice information SD1 and SD2 based on the voices S1 and S2 are included in the voice signals 211 and 212, respectively. The method for transmitting the voice signals 21 and 212 by the voice input apparatus 201 and the voice input apparatus 202 and the form of the voice information SD1 and SD2 are not limited in particular. The voice information SD1 and SD2 may be analog information represented by the analog signal or digital information represented by the set of the digital values. When the voice information SD1 and SD2 are the digital information, the signal processing such as compression, encryption, and the like may be additionally performed.

The voice recording apparatus 203 receives the voice signals 211 and 212 and extracts the voice information SD1 and SD2. The voice recording apparatus 203 performs the predetermined process to the voice information SD1 and SD2 based on the distances L1, L2, and L3. Further, the voice recording apparatus 203 may perform the process based on the directions D1 and D2.

By the way, the distance L1 is not always equal to the distance L2. Accordingly, the volume levels of the voices S1 and S2 represented by the voice information SD1 and SD2 are adjusted so as to compensate the distance difference between the distance L1 and the distance L2. Namely, the voice information SD1 and SD2 are changed so as to obtain a desired loudness with respect to the voices S1 and S2.

When the distance L1 is equal to the distance L2, the loudness of the voice may be intentionally adjusted as if the distance L1 and the distance L2 are different from each other. Namely, when the distance between the voice recording apparatus 3 and the voice input apparatus 201 is equal to the distance between the voice recording apparatus 3 and the voice input apparatus 202, the loudness of the voice S1 may be reduced as if the distance between the voice recording apparatus 203 and the voice input apparatus 201 is greater than the distance between the voice recording apparatus 203 and the voice input apparatus 202.

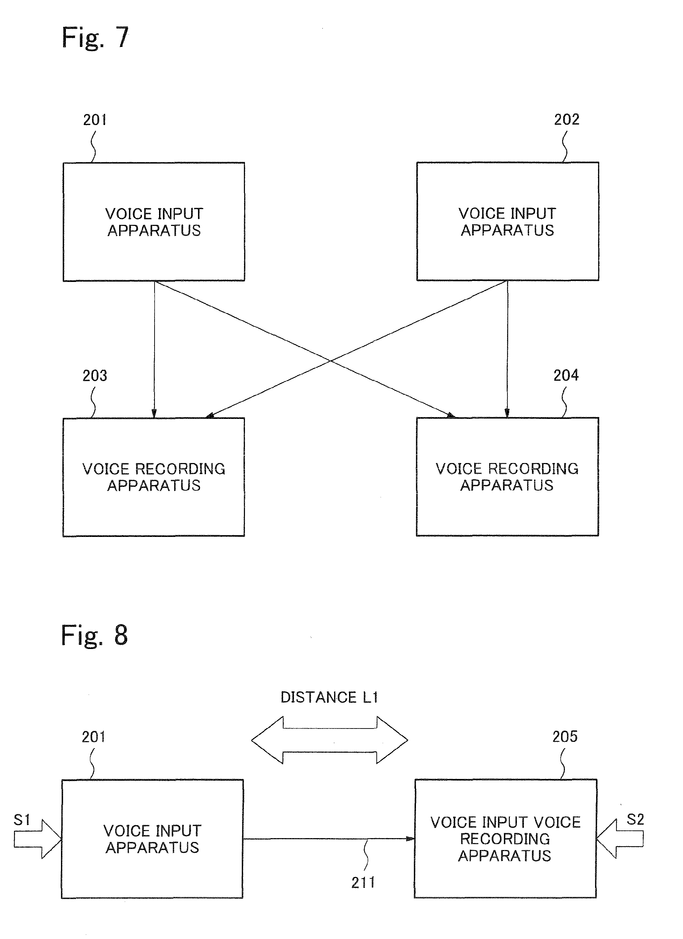

In the above-mentioned description, only one voice recording apparatus 203 is used as the voice recording apparatus. As shown in Fig. 7, the stereophonic recording system of the exemplary embodiment can use a plurality of voice recording apparatuses. The stereophonic recording system shown in Fig. 7 is a first modification example of the stereophonic recording system shown in Fig. 6 and in the stereophonic recording system shown Fig. 7, a voice recording apparatus 204 is added to the stereophonic recording system shown in Fig. 6. When the stereophonic recording system shown in Fig. 7 is used, the voice recording apparatus 204 may perform the process that is the same as the process performed by the above-mentioned voice recording apparatus 203 by using the distance between the voice recording apparatus 204 and the voice input apparatus 201, the distance between the voice recording apparatus 204 and the voice input apparatus 202 (correspond to the distance L1 and the distance L2), and the distance L3.

As described above, in the stereophonic recording system of the exemplary embodiment, the predetermined process is applied to the voice information obtained from two voice input apparatuses by using the distance between the voice input apparatus and the voice recording apparatus. Accordingly, the stereophonic recording system of the exemplary embodiment has an effect in which even when the set position of the voice input apparatus is not the best position for the stereophonic recording, the required compensation can be performed and the stereophonic voice information can be generated.

Further, one of two voice input apparatuses may have the voice recording function. Fig. 8 shows a second modification example of the stereophonic recording system of the second exemplary embodiment. A voice input recording apparatus 205 has both the function of the voice input apparatus 202 and the function of the voice recording apparatus 203 that are explained above. However, the voice input recording apparatus 205 does not have the transmission function to transmit the voice information SD2.

The voice input recording apparatus 205 inputs the surrounding voice S2 and generates the voice information SD2 based on the voice S2. The voice input recording apparatus 205 generates stereophonic voice information SSD based on the voice information SD2, the voice information SD1 based on the voice S1 that is received from the voice input apparatus 201, and the distance L1.

### (Third exemplary embodiment)

The specific exemplary embodiment of the present invention will be described. As an example of the device cooperation system, there is a stereophonic voice reproduction system in which two voice input apparatuses and two voice reproduction apparatuses operate in cooperation with each other and the stereophonic reproduction is performed.

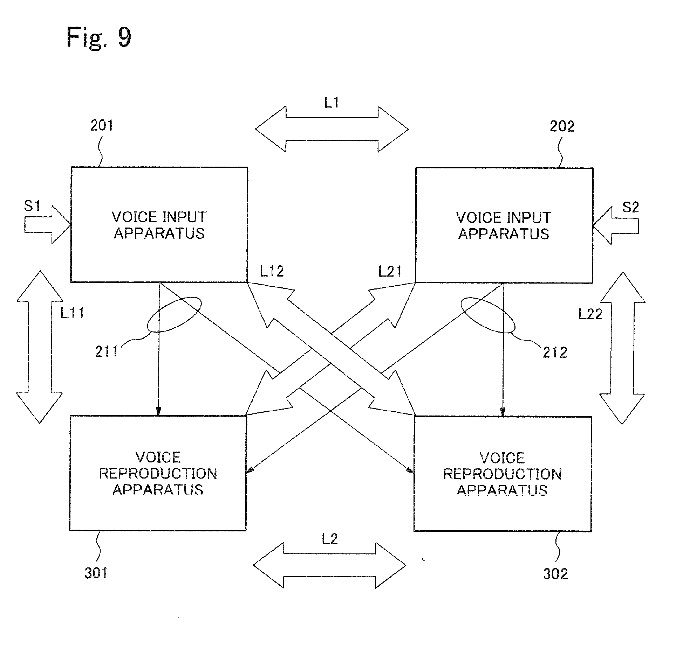

Fig. 9 shows the stereophonic voice reproduction system of the third exemplary embodiment of the present invention. The stereophonic voice reproduction system comprises the voice input apparatus 201, the voice input apparatus 202, a voice reproduction apparatus 301, and a voice reproduction apparatus 302.

A "voice reproduction apparatus speaker" may have only the voice reproduction function and a voice information processing function. Accordingly, the portable telephone set or the PC that includes voice output means may be used as the speaker and a process of the voice information may be performed by software.

The "voice input apparatus" of the third exemplary embodiment is the same as that of the second exemplary embodiment.

The voice input apparatus 201, the voice input apparatus 202, the voice reproduction apparatus 301, and the voice reproduction apparatus 302 are arranged at a predetermined position or an arbitrary position.

The distances between the apparatuses: the voice input apparatus 201, the voice input apparatus 202, the voice reproduction apparatus 301, and the voice reproduction apparatus 302 are represented by the following symbol.

The distance between the voice input apparatus 201 and the voice input apparatus 202: L1.

The distance between the voice reproduction apparatus 301 and the voice reproduction apparatus 302: L2

The distance between the voice input apparatus 201 and the voice reproduction apparatus 301: L11.

The distance between the voice input apparatus 202 and the voice reproduction apparatus 301: L21.

The distance between the voice input apparatus 201 and the voice reproduction apparatus 302: L12.

The distance between the voice input apparatus 202 and the voice reproduction apparatus 302: L22.

The distances between the apparatuses: the voice input apparatus 201, the voice input apparatus 202, the voice reproduction apparatus 301, and the voice reproduction apparatus 302 are measured or detected by a predetermined method. For example, each of the voice input apparatus 201, the voice input apparatus 202, the voice reproduction apparatus 301, and the voice reproduction apparatus 302 obtains the position information thereon by using the GPS, informs the other apparatus of the obtained the position information, and calculates the difference between the position information, and whereby, each of the voice input apparatus 201, the voice input apparatus 202, the voice reproduction apparatus 301, and the voice reproduction apparatus 302 may measure the distance between them. Further, the distances between the apparatuses: the voice input apparatus 201, the voice input apparatus 202, the voice reproduction apparatus 301, and the voice reproduction apparatus 302 can be estimated by using a method shown in the seventh exemplary embodiment as an example.

A method for discriminating the positions, a right side position and a left side position of the voice reproduction apparatus, at which the voice input apparatus 201 and the voice input apparatus 202 are located is the same as that of the second exemplary embodiment.

The voice input apparatus 201 and the voice input apparatus 202 have the voice input function. The voice input apparatus 201 and the voice input apparatus 202 input the surrounding voices S1 and S2 and transmit the voice signals 211 and 212 to the voice reproduction apparatus 301 and the voice reproduction apparatus 302, respectively. The directivity is the same as the directivity of the second exemplary embodiment.

The voice information SD1 and SD2 based on the voices S1 and S2 are included in the voice signals 211 and 212, respectively. The method for transmitting the voice signals 211 and 212 by the voice input apparatus 201 and the voice input apparatus 202 and the form of the voice information SD1 and SD2 are not limited in particular. The voice information SD1 and SD2 may be analog information or digital information. When the voice information SD1 and SD2 are the digital information, the signal processing such as compression, encryption, and the like may be additionally performed.

The voice reproduction apparatus 301 and the voice reproduction apparatus 302 receive the voice signals 211 and 212 and extract the voice information SD1 and SD2. The voice reproduction apparatus 301 and the voice reproduction apparatus 302 perform the predetermined process to the voice information SD1 and SD2 based on the distances L1, L11, L21, L12, L22, and L2. The voice reproduction apparatus 301 and the voice reproduction apparatus 302 may additionally perform a process to the voice information SD1 and SD2 based on the directions D1 and D2.

The sound reproduction device 301 generates voice information SD3 representing the voice outputted by the voice reproduction apparatus 301. The voice reproduction apparatus 302 generates voice information SD4 representing the voice outputted by the voice reproduction apparatus 4.

With respect to the voice information SD1 and SD2, the loudness of the voice may be adjusted based on the distances L1 and L2 like the second exemplary embodiment.

As described above, in the stereophonic voice reproduction system of the exemplary embodiment, the predetermined process is applied to the voice information obtained from two voice input apparatuses by using the distance between the voice input apparatus and the voice reproduction apparatus. Accordingly, the stereophonic voice reproduction system of the exemplary embodiment has an effect in which even when the set position of the voice input apparatus is not the best position for the voice input for the stereophonic voice reproduction, the required compensation can be performed and the stereophonic voice can be reproduced.

### (Fourth exemplary embodiment)

An image that cannot be obtained by using one image input apparatus can be created by cooperatively operating two image input apparatuses and an image recording apparatus and combining the images photographed by the plurality of image input apparatuses. As an example of such device cooperation system, there is a panoramic image photographing system. Namely, by combining the images photographed in different directions by the plurality of image input apparatuses, a panoramic image is created.

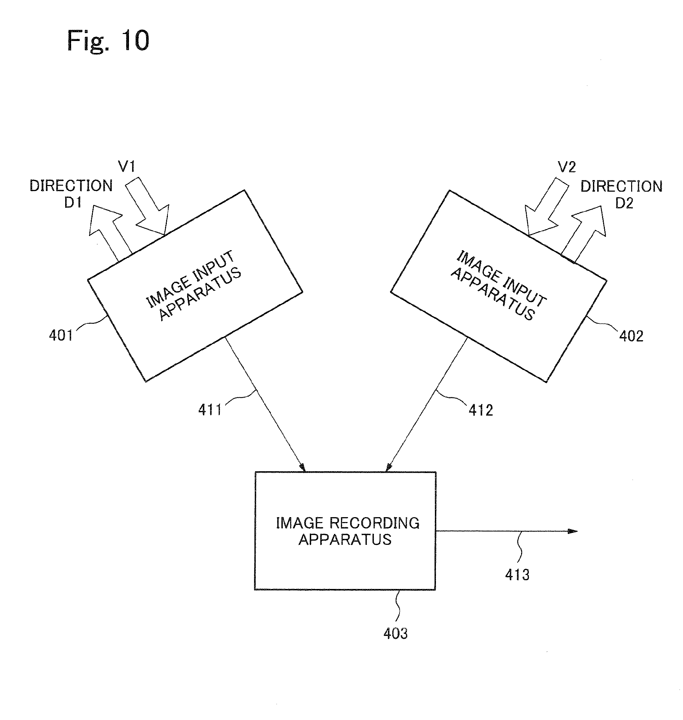

Fig. 10 is a block diagram showing a configuration of the panoramic image photographing system of the exemplary embodiment. The panoramic image photographing system of the exemplary embodiment comprises image input apparatuses 401 and 402, and an image recording apparatus 403.

The "image input apparatus" means an apparatus having an image input function to input an image that is a light from an object and an image information output function to output image information. The image input apparatus may not have an image information recording function to record the image information. Accordingly, a CCD camera, an USB camera, or the like that has only an image sensor and a signal output function, inputs the image, and outputs the image signal or the image information can be used as the image input apparatus. Even when a common camera having the image information recording function is used, because it has at least the image input function and the image information output function, it can be used as the image input apparatus.

The "image recording apparatus" means an apparatus having the image information recording function. The image recording apparatus may not have the image input function and the image information output function. Accordingly, a video recorder, a PC or the like which has only a function to input for example, an image signal or image information and record it can be used as the image recording apparatus. Even when the common camera having the image input function and the image information output function is used, because it has the image information recording function, it can be used as the image recording apparatus.

The "image input recording apparatus" has the image input function, the image information recording function, and the image information output function. Namely, a portable telephone set or a PC that includes a common camera or a camera function can be used as the image input recording apparatus. As described above, the image input recording apparatus can be used as the image input apparatus or the image recording apparatus. Namely, the portable telephone set or the PC that includes the common camera or the camera function can be used as the image input apparatus or the image recording apparatus by using a part of the function provided therein.

The image input apparatus 401 includes an image input unit (not shown). An image input plane of the image input unit is arranged so that it faces the direction D1. The image input unit of the image input apparatus 401 inputs an image V1 in the direction D1.

Similarly, the image input apparatus 2 includes the image input unit (not shown). An image input plane of the image input unit is arranged so that it faces the direction D2. The image input unit of the image input apparatus 402 inputs an image V2 in the direction D2.

The image input unit is for example, a CCD (Charge Coupled Device) image sensor or a CMOS (Complementary Metal Oxide Semiconductor) image sensor. The image input unit may include an optical system such as a lens and an automatic focus adjustment function. Because a specific configuration and an attached function of the image input unit are not important in the exemplary embodiment, the detailed description will be omitted.

The image input apparatuses 401 and 402 input the image V1 in the direction D1 and the image V2 in the direction D2 and transmit image signals 411 and 412 to the image recording apparatus 3, respectively. Image information VD1 and VD2 based on the images V1 and V2 are included in the image signals 411 and 412, respectively. A method for transmitting the image signals 411 and 412 by the image input apparatuses 401 and 402 and the form of the image information VD1 and VD2 are not limited in particular. The image information VD1 and VD2 may be analog information or digital information. When the image information VD1 and VD2 are the digital information, the signal processing such as compression, encryption, and the like may be additionally performed.

The image input apparatuses 401 and 402 transmit the direction information about the directions D1 and D2 to the image recording equipment 3, respectively. The direction information are the information about the directions D1 and D2 which the image input planes of the image input apparatuses 401 and 402 face and indicate photographing directions of the image input apparatuses 401 and 402, respectively. The direction information includes for example, a value of an angle (azimuth direction) in a horizontal plane and a value of an angle (elevation angle, depression angle) in a vertical plane.

The directions D1 and D2 can be detected by various methods. For example, a magnetic field sensor is provided in the image input apparatuses 401 and 402 and the directions may be directly measured.

The image recording apparatus 403 determines the arrangement of the images received from the image input apparatuses 401 and 402 based on the direction information. For example, when the direction D1 is the east direction and the direction D2 is the south direction, the image received from the image input apparatus 401 is arranged in a left side and the image received from the image input apparatus 402 is arranged in a right side.

The image recording apparatus 403 receives the image signals 411 and 412 and extracts the image information VD1 and VD2. The predetermined process is applied to the image information VD1 and VD2 based on the directions D1 and D2. Specifically, the image recording apparatus 3 inputs the image signals V1 and V2 and generates combined image information V3 based on the directions D1 and D2.

The times at which the images V1 and V2 included in the image information VD1 and VD2 have been photographed may be different from each other. Namely, the still images that are photographed at a different time may be combined.

The image inputted by another image input apparatus may be used by using an image sharing method shown in an eight exemplary embodiment as an example.

As described above, the image sharing method shown in the ninth exemplary embodiment as an example can be additionally used as means for correcting the image.

When the images are combined, the image recording apparatus 403 may acquire the predetermined information acquired at the positions at which the image input apparatuses 401 and 402 are located from the image input apparatuses 401 and 402 and correct the images based on the acquired information. A specific example of the method for correcting the image is described in the ninth exemplary embodiment later.

The image recording apparatus 403 may acquire the information about the positions of the image input apparatuses 401 and 402. The image recording apparatus 403 also acquires the information about its own position. The image recording apparatus 403 obtains the distance between the image input apparatuses 401 and 402. The image recording apparatus 403 performs the process in which the image information VD1 and VD2 are corrected based on the distance and the sizes of the images V1 and V2 are adjusted and any other process.

The distance between the image recording apparatus 403 and the image input apparatus 401 and the distance between the image recording apparatus 403 and the image input apparatus 402 may be estimated by using the distance estimation function shown in the seventh exemplary embodiment. Namely, by operating the image recording apparatus 403 and the image input apparatus 401 as the devices 401 and 402 in the seventh exemplary embodiment, the distance between the image recording apparatus 403 and the image input apparatus 401 is estimated. Similarly, the distance between the image recording apparatus 403 and the image input apparatus 402 is estimated.

Further, in case of a moving image, a still image at a certain specific time can be extracted. Accordingly, by acquiring the moving images that are taken in a time range including a certain common time t0 from the image input apparatuses 401 and 402, the images at the time t0 can be combined. Namely, the image input apparatus 401 takes the moving image during a period from the time t11 to the time t12 including the time t0 and the image input apparatus 402 takes the moving image during a period from the time t21 to the time t22 including the time t0. Here, t11 < t0 < t12 and t21 < t0 < t22.

The image input apparatuses 401 and 402 extract the still images at the time t0 from the moving images taken by themselves and transmit the images to the image recording apparatus 403, respectively. The information processing process after this process is the same as the process mentioned above. The image input apparatuses 401 and 402 may transmit the moving images taken by themselves to the image recording apparatus 403, respectively and the image recording apparatus 403 may extract the still images at the time t0.

As described above, the panoramic image photographing system of the exemplary embodiment has an effect in which a panoramic image can be taken based on the images from the plurality of image input apparatuses and the directions in which the respective images are taken.

### (Fifth exemplary embodiment)

By cooperatively operating the voice input apparatus and the image recording apparatus, information in which the image and the voice are combined can be created. For example, a photograph having a special effect that cannot be obtained by a usual photograph can be created by attaching a voice memorandum to the taken photograph or recording the surrounding voice at the time of taking the photograph.

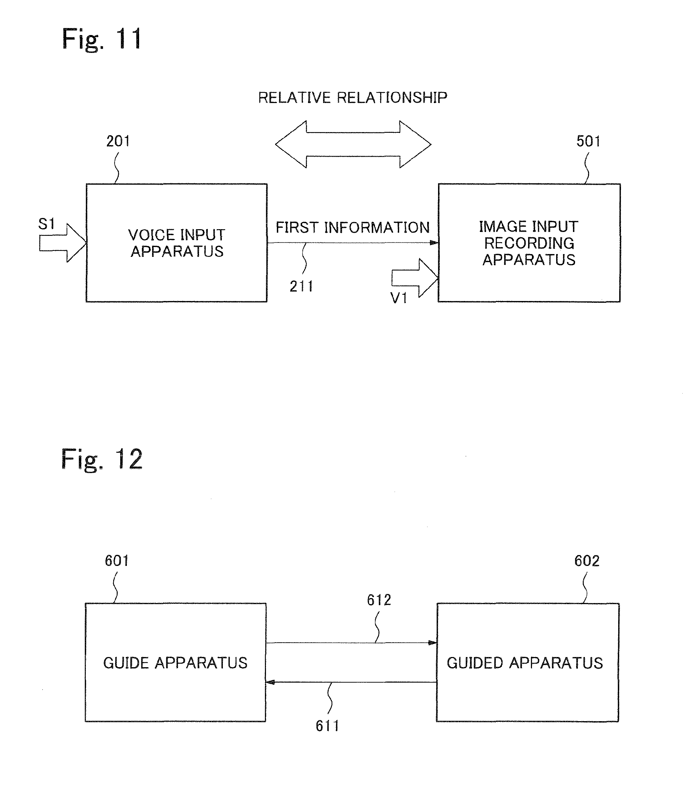

Fig. 11 is a block diagram showing a configuration of an image voice complex system of the fifth exemplary embodiment. The image voice complex system of the exemplary embodiment comprises the voice input apparatus 201 and an image input recording apparatus 501.

The voice input apparatus 201 inputs the surrounding voice S1 and transmits the voice signal 211 including the voice information SD1 and the position information on the voice input apparatus 201 to the image input recording apparatus 501.

The image input apparatus 501 includes the image input unit (not shown). The image input apparatus 501 inputs the image V1 and generates the image information VD1. The image input apparatus 501 extracts the voice information SD1 from the voice signal 211 received from the voice input apparatus 201, performs a predetermined process based on the voice information SD1, and generates image voice complex information VSD that is combined with the image information VD1.

Further, the image inputted by another image input apparatus may be used by using the image sharing method shown in the eighth exemplary embodiment as an example.

As described above, the image sharing method shown in the ninth exemplary embodiment as an example can be additionally used as means for correcting the image.

As mentioned above, the image voice complex system of the exemplary embodiment has an effect in which the information in which the voice is combined with the image can be created by the voice input apparatus.

### (Sixth exemplary embodiment)

In a common navigation system, a device for navigation (hereinafter, referred to as a "guide device") obtains information about its own current position by using the GPS or the like and indicates a route to a destination in real time.

In contrast, a method in which the route is indicated to an apparatus (hereinafter, referred to as a "guided device") that is navigated by an external guide device in real time may be used. For example, there is a method in which the guided device notifies the guide device of information about the current position at a predetermined fixed time interval and the guide device transmits guide information about the route to the guided device while confirming the current position of the guided device. Hereinafter, this navigation method is referred to as a "cooperative navigation". When a portable telephone set is used as the guide device and another portable telephone set having a GPS function is used as the guided device, the cooperative navigation can be realized.

In the cooperative navigation system, not only the information about the current position and the route guide is transmitted and received between the guide device and the guided device, but also the predetermined cooperation is performed and whereby, certainty of the navigation can be improved. An example of the cooperation method is described below.

Fig. 12 is a block diagram showing a configuration of the cooperative navigation system of the sixth exemplary embodiment. The cooperative navigation system of the exemplary embodiment comprises a guide device 601 and a guided device 602.

The guide device 601 includes a position information reception unit and a guide information transmission unit (not shown). The position information reception unit receives guided device information 611 including the position information and speed information from the guided device 602. The guide information transmission unit (not shown) transmits route instruction information 612 for informing the guided device 602 of the route to be taken by the guided device 602. The route guide information is inputted to the guide device 601 by a user (hereinafter, referred to as a "navigator") of the guide device 601. The navigator controls a transmission time of the route guide information. The transmission time is controlled by the navigator by performing a predetermined operation to the guide device 601. The detailed operation of the guide device 601 will be described later.

The guided device 602 comprises a position information acquisition unit, a speed information acquisition unit, a position information transmission unit, and a guide information reception unit (not shown). The position information acquisition unit acquires the position information indicating the current position of the guided device 602 by using the GPS or the like. The speed information acquisition unit acquires the speed information indicating a current moving speed of the guided device 602. The position information transmission unit transmits the position information and the speed information to the guide device 601. The guide information reception unit receives the route guide information from the guide device 601.

The speed information acquisition method performed by the speed information acquisition unit is not limited in particular. For example, the speed may be calculated based on change per a unit time with respect to the position information obtained by the position information acquisition unit. The speed information acquisition unit may obtain the speed by detecting acceleration of the guided device 602 by using an acceleration sensor and calculating the acceleration.

The navigator inputs the route guide information to the guide device 601 based on the position information and the speed information from the guided device 602. For example, the navigator recognizes that the guided device 602 comes close to an intersection at which the guided device 602 has to change the route based on the position information, generates the route guide information, and inputs it to the guide device 601. However, at the time of inputting the route guide information, the route guide information is not transmitted to the guided device 602.

The navigator controls the time at which the route guide information is transmitted to the guided device 602 based on the speed information. Namely, when the moving speed of the guided device 602 is high, the route guide information is transmitted when the distance between the guided device 602 and the intersection is large. When the moving speed of the guided device 602 is low, the route guide information is transmitted when the guided device 602 comes just near the intersection.

When the route instruction information is inputted to the guide device 601, the guide information transmission unit may automatically transmit the route guide information without regard to the transmission time. In this case, the transmission time of the route guide information may be controlled based on the time at which the navigator inputs the route guide information to the guide device 601.

The guide device 601 may have a device position display function that displays the information about the current position of the guided device 602 on a map. When the guide device 601 has the device position display function, the navigator can transmit the route guide information while confirming the current position of the guided device 602 on the map.

As described above, in the cooperative navigation system of the exemplary embodiment, the information about the current position, the moving speed, and the route guide is transmitted and received between the guide device and the guided device. Therefore, when the route guide information has to be transmitted to the guided device, for example, when the guided device has to change the route or any other case, the information can be surely transmitted by the required time. Accordingly, the cooperative navigation system of the exemplary embodiment has an effect in which certainty of the navigation can be improved.

### (Seventh exemplary embodiment)

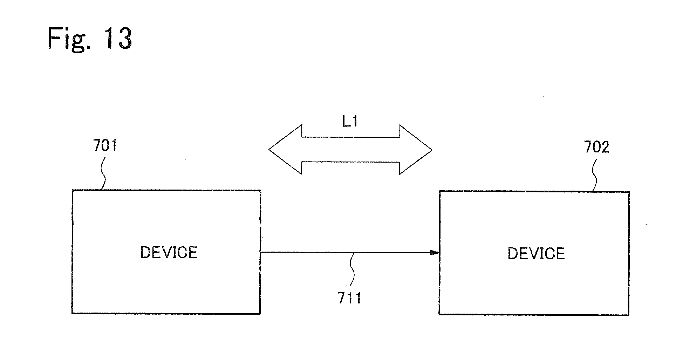

By cooperatively operating two devices, the distance between two apparatuses can be estimated. Figs. 13, 14A, and 15 are block diagrams showing a configuration of a distance estimation system of a seventh exemplary embodiment. The distance estimation system of the exemplary embodiment comprises a device 701 and a device 702. The device 701 and the device 702 have an input function and an output function for various signals and whereby, the distance L1 between the device 701 and the device 702 can be estimated.

### 1) Method using reference signal

Fig. 13 shows an example of the distance estimation system using the reference signal. The device 701 has a transmission function to transmit a reference signal 711 having a predetermined intensity. It is assumed that there is a certain relation between an attenuation of intensity of the reference signal 711 and a reach distance of the reference signal 711 (hereinafter, referred to as a "signal attenuation characteristic").

The device 702 has a reception function to receive the reference signal 711. The signal attenuation characteristic is expressed by a mathematical expression and stored in the device 702. A table showing a correspondence relation between the attenuation of intensity of the reference signal 711 and the reach distance of the reference signal 711 may be created and set to the device 702. The device 702 estimates the distance L1 based on the receiving intensity at the time of receiving the reference signal 711 and the signal attenuation characteristic.

A specific example of estimating the distance will be described. For example, the device 701 transmits the voice signal having a predetermined loudness level. An attenuation characteristic distance of the voice signal is measured in advance and set to the device 702. The device 702 receives the voice signal and estimates the distance L1 based on the loudness level at the time of reception. Another signal whose reception strength changes in proportion to the reach distance for example, an optical signal or the like can be similarly used instead of the voice signal.

In the above-mentioned example, the device 702 acquires the information about the estimated distance. When the device 701 requires the information about the estimated distance, the information about the estimated distance is transmitted from the device 702 to the device 701.

### 2) Method using device size information and photographed image

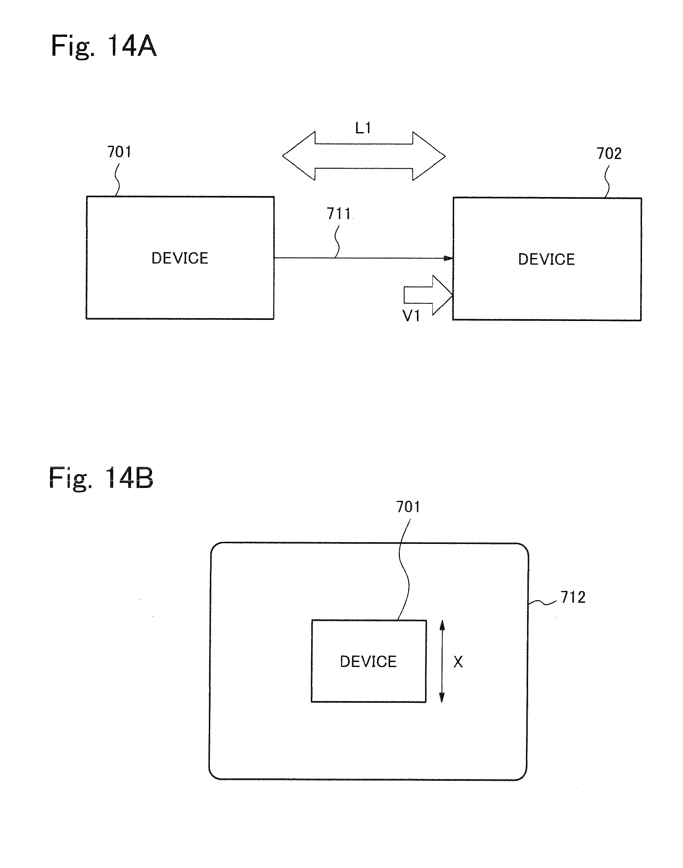

Fig. 14A is an example of the distance estimation system using a size of the photographed image. The device 702 has the image input function. The device 702 holds focal distance information on an optical system provided in the image input function.

The device 701 transmits the size information 711 about the size of the device 701 (the whole size or the size of the predetermined part of the device 702) to the device 702.

The device 702 inputs (photographs) the image V1 of the device 701 and estimates the distance L1 between the device 701 and the device 702 based on a size x of the image of the device 701, the size information 711 on the device 701, and the focal distance information.

The discrimination of the image of the device 701 in the image 712 photographed by the device 702 is performed by image recognition or a manual operation by the user of the device 702. As an example of the manual operation by the user, there is a method in which an image range of the device 701 in the whole image 712 is inputted to the device 702 by the predetermined method. The user may input a ratio of a size x of the image of the device 702 in the whole image 712 to the device 702.

By using any one of these methods, the distance between the device 701 and the device 702 can be estimated based on the size x of the image of the device 701 or the ratio of the size x of the image of the device 701 to the whole image, and the focal distance information.

### 3) Method using automatic focus information

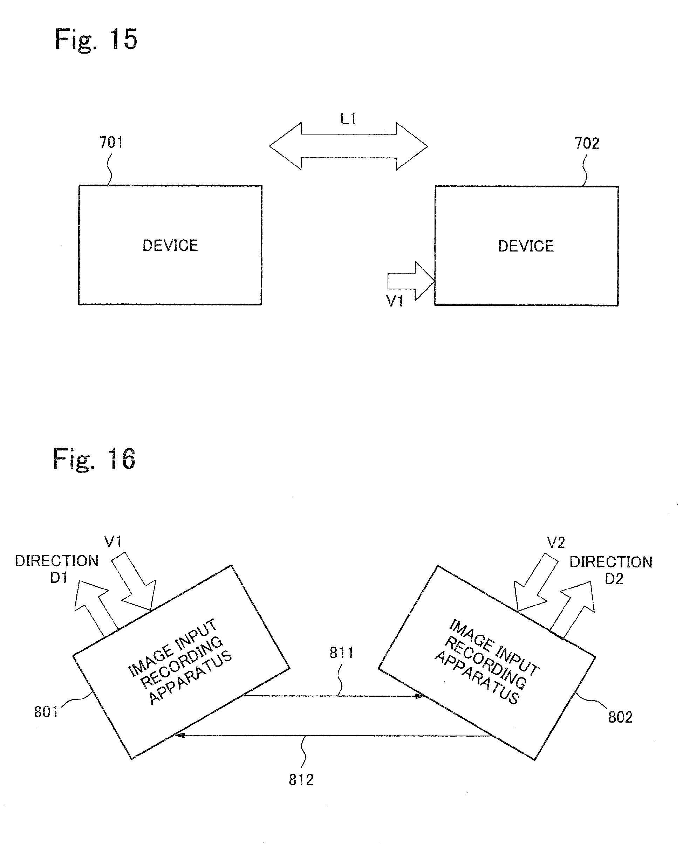

Fig. 15 shows an example of the distance estimation system using focus adjustment information at the time of photographing the image. The device 702 has the image input function including an automatic focus function. The device 702 holds the focal distance information on the optical system provided in the image input function. The device 702 estimates the distance L1 between the device 701 and the device 702 based on the information about the lens position at the time of an in-focus state when photographing the image of the device 701 and the focal distance information.

Additionally, a distance measurement method using the GPS can be used. When the distance L1 between the device 701 and the device 702 is obtained by using the GPS, the device 701 acquires the position information from the device 702 and calculates the difference between the acquired position information and the information about its own position. Because this method is well-known, the explanation of this method will be omitted.

As described above, in the distance estimation system of the exemplary embodiment, a signal or information transmitted by one of two devices which operate in cooperation with each other is received by the other device and the distance between the devices is estimated based on the result. Accordingly, the distance estimation system of the exemplary embodiment has an effect in which an approximate value of the distance between the devices can be easily obtained.

As described above, the distance estimation system of the exemplary embodiment can be used as the distance acquisition means in the first to third exemplary embodiment that use the distance as the relative relationship.

### (Eighth exemplary embodiment)

By cooperatively operating a plurality of image input recording apparatuses, the image inputted by the image input unit of another image input recording apparatus can be photographed. For example, a plurality of users, each of which has a camera, set their image input units of the cameras in their intended directions, respectively. The images inputted by respective cameras are shared by all the cameras by using a network. The user of the certain camera records the image from the other camera. Namely, the certain camera can take a photograph that is taken by the other camera.

Fig. 16 is a block diagram showing a configuration of an image sharing system of the exemplary embodiment. The image sharing system of the exemplary embodiment comprises an image input recording apparatus 801 and an image input recording apparatus 802. The image input recording apparatus is an apparatus having the image input function, the image information recording function, and the image information output function like the fourth exemplary embodiment. The portable telephone set or the PC that includes a common camera or a camera function can be used as the image input recording apparatus.

The image input recording apparatus 801 comprises the image input unit (not shown). An image input plane of the image input unit is arranged so as to face the direction D1. The image input unit of the image input recording apparatus 801 generates the image information VD1 from the image V1 that is inputted from the direction D1.

The image input recording apparatus 802 comprises the image input unit (not shown). The image input plane of the image input unit is arranged so as to face the direction D2. The image input unit of the image input recording apparatus 802 generates the image information VD2 from the image V2 which is inputted from the direction D2.

The image input recording apparatus 801 continuously transmits an image signal 811 to the image input recording apparatus 802. The image input recording apparatus 802 continuously transmits an image signal 812 to the image input recording apparatus 801. The image information VD1 and VD2 based on the images V1 and V2 are included in the image signals 111 and 112, respectively.

Thus, the image input recording apparatus 801 can continuously acquire the information on the image V2 inputted by the image input recording apparatus 802. The image input recording apparatus 802 can continuously acquire the information about the image V12 inputted by the image input recording apparatus 801.

Accordingly, the image input recording apparatus 801 can select either the image V1 inputted by the image input recording apparatus 801 itself or the image V2 inputted by the image input recording apparatus 802 and record it. The image input recording apparatus 802 can select either the image V2 inputted by the image input recording apparatus 802 itself or the image V1 inputted by the image input recording apparatus 801 and record it.

Two images may be combined without selecting either the image VI or the image V2 like the fourth exemplary embodiment. For example, the image of the user of the image input recording apparatus 801 that is photographed by the image input recording apparatus 802 can be combined with the image of the user of the image input recording apparatus 802 that is photographed by the image input recording apparatus 801. The combined image becomes the same as an image photographed when two users are located side-by-side. When the number of the image input recording apparatuses is increased, a group photograph of the users of the image input recording apparatuses can be obtained by combining the images.

By the way, some portable telephone sets with a camera function that are one kind of image input recording apparatuses include two image input units. One (outer camera) is a camera for common photograph and is pointed in the direction of the object by the user. The other camera (inner camera) is used for photographing the user of the camera. Therefore, as mentioned above, not only the image photographed by the outer camera but also the image photographed by the inner camera may be shared.

As described above, in the image sharing system of the exemplary embodiment, the image inputted by the other image input apparatus can be used. Accordingly, the image sharing system of the exemplary embodiment has an effect in which various processes such as a process for storing the image inputted by the other image input apparatus, a process for using the image, a process for combining the image and the other image, and the like can be performed.

As described above, the image sharing system of the exemplary embodiment can be used as the image input means in the fourth or fifth exemplary embodiment that uses the inputted image.

### (Ninth exemplary embodiment)

By cooperatively operating an object side device and an image correction apparatus which corrects the image of the object, the correction required to the image can be properly performed.

The correction such as color correction, noise removal, or the like may be applied to the image. For example, a process in which the color is changed from a dark color to a light color when the color of the object is dark, small dot is removed from the image when there is the small dot in the image, and whereby, a smooth image is obtained may be performed. Such correction is performed based on only the photographed image. Therefore, even when the color of the image is completely the same as an actual color of the object, there is a possibility that the correction is performed. When the small dot is photographed, there is a possibility that the dot is removed even when the object includes such dot actually. Such correction is allowed when the image is intentionally corrected but the correction is not allowed when the photograph of the object is intended to be properly taken.

In contrast, there is a case in which such correction is required by the object. In such case, the desirable correction cannot be determined based on the photographed image. Namely, it is impossible to surely determine the necessity of the correction based on only the color or the image having a possibility of including a noise.

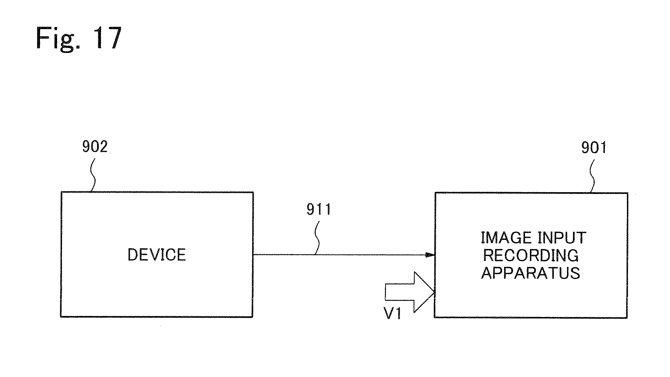

Accordingly, the image correction apparatus of the exemplary embodiment acquires information from the object and corrects the image based on the information. Fig. 17 is a block diagram showing a configuration of the image correction system of the exemplary embodiment. The image correction system of the exemplary embodiment comprises an image input recording apparatus 901 and a device 902. The image input recording apparatus is an apparatus having the image input function, the image information recording function, and the image information output function like the fourth exemplary embodiment. The portable telephone set or the PC that includes a common camera or a camera function can be used as the image input recording apparatus.

The image input recording apparatus 901 comprises the image input unit (not shown). The image input unit of the image input recording apparatus 801 inputs the image V1 of the object and generates the image information VD1.

The device 902 transmits the object information about the object to the image input recording apparatus 901 as an object information signal 911. The object information includes object state information or correction content information.

The "object state information" is information about a state of the surface of the object and information about a parameter which affects image quality. The object state information is information about for example, the temperature, the humidity, the reflectivity, or the like of the face of the person that is the object when the object is a person. In the image input recording apparatus 901, the correction that is applied to the image according to the object state may be determined in advance.

The "correction content information" includes information about the content of the correction that is applied to the image of the object. The image input recording apparatus 901 corrects the image of the object according to the correction content information.

The image input recording apparatus 901 performs the predetermined correction to a part of the photographed image in which the object is photographed based on the object state. Namely, the information about the state of the object or the information about the correction content are transmitted to the image input recording apparatus from the device 902 and the image input recording apparatus corrects the image of the object based on the object information.

In the above explanation, it is assumed that the number of the objects is one and an image region to be corrected can be discriminated. For example, when the object is one person and the image of the face of the person is corrected, a face part in the photograph is discriminated by a predetermined image process. The correction is applied to the part based on the object state information that has been received.

When a plurality of objects exist, it is necessary to determine the object to which the correction has to be applied. For this determination, it is necessary to associate the objects with the respective images of the objects in the image. A method for performing this process will be described later as a tenth exemplary embodiment.

As described above, in the image correction system of the exemplary embodiment, the object state information or the correction content information is transmitted to the image input recording apparatus from the object side. The image input recording apparatus corrects the image of the object based on the information obtained from the object side. Therefore, the image correction system of the exemplary embodiment has an effect in which the appropriate correction according to the state of the object can be performed.

As described above, the image sharing system of the exemplary embodiment can be additionally used as means for correcting the image in the fourth or fifth exemplary embodiment in which the process using the image is performed.

### (Tenth exemplary embodiment)

By cooperatively operating the object side device and the device for analyzing an image, the image part of the predetermined object in the image in which the plurality of objects are included can be discriminated. For example, in the image correction system of the ninth exemplary embodiment, when the image part of the specific object in the image in which the plurality of objects are included is corrected, an image analysis system of the exemplary embodiment can be used.

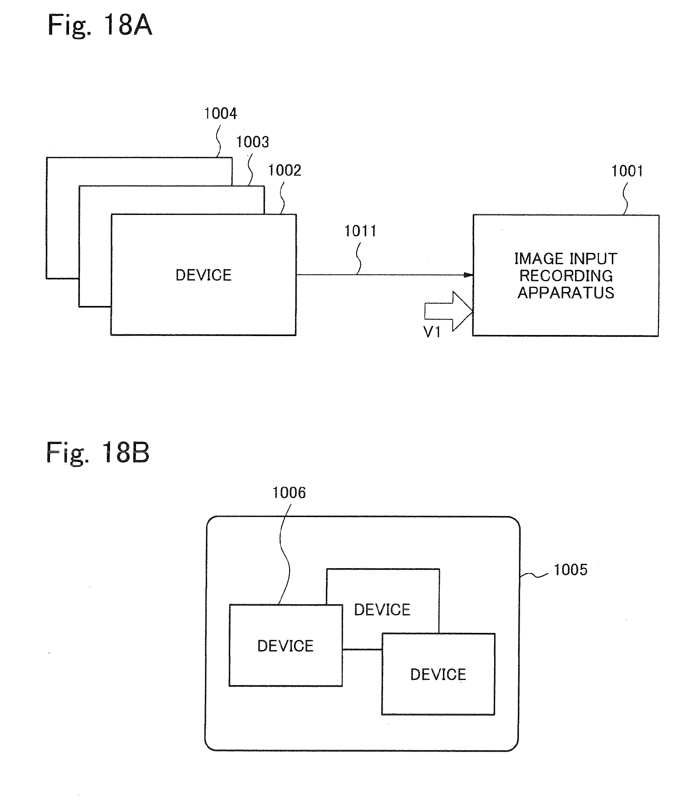

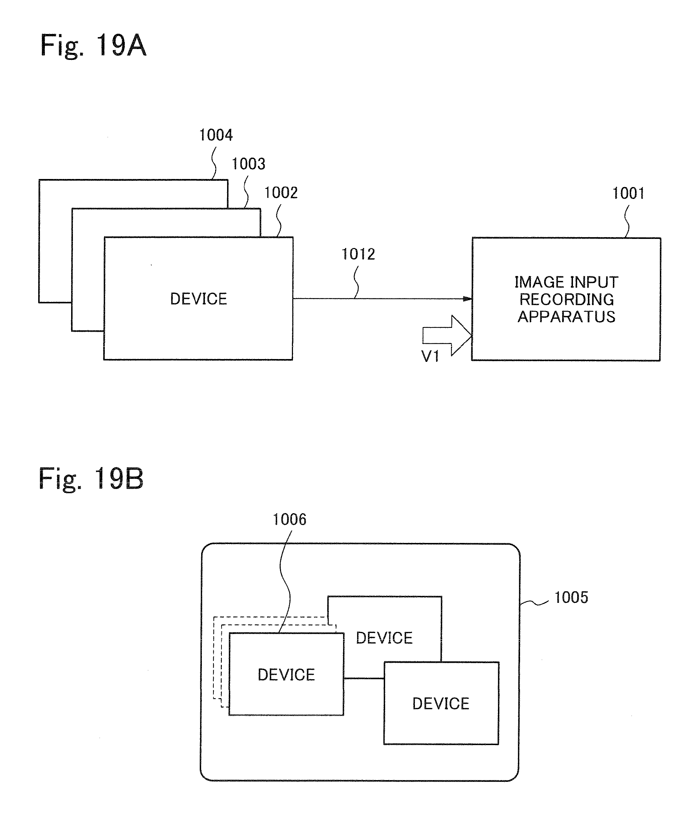

Figs. 18A and Fig. 19A are block diagrams showing a configuration of an image analysis system of a tenth exemplary embodiment. The image analysis system of the exemplary embodiment comprises an image input recording apparatus 1001 and devices 1002, 1003, and 1004. By cooperatively operating the image input recording apparatus 1001 and the devices 1002, 1003, and 1004, the object in the image can be discriminated.

### 1) Method in which position information is transmitted from object

The object in the image can be associated with the device which transmits the position information based on the position information on the device that is received from the device. Whereby, the object in the image can be discriminated.

Fig. 18A is an example of the image analysis system that uses the position information. Fig. 18B is an example of the image displayed in the image input recording apparatus. The image input recording apparatus 1001 photographs the image V1 of the devices 1002, 1003, and 1004.

The devices 1002, 1003, and 1004 transmit position information 1011 on the devices 1002, 1003, and 1004 to the image input recording apparatus 1001, respectively.

The image input recording apparatus 1001 can associate the objects in the image with the devices 1002, 1003, and 1004 based on the position information received from the devices 1002, 1003, and 1004. That is because the relative position of the devices 1002, 1003, and 1004 can be determined based on the position information on the devices 1002, 1003 and 1004.

For example, when it is determined that the device 1002 is located at the rightmost position among the devices 1002, 1003, and 1004 based on the position information on the device 1002, it can be determined that the device 1006 that is positioned at the leftmost position in an image 1005 is the device 1002.

### 2) Method in which information about movement of terminal is transmitted from object

The object in the image can be associated with the device which transmits movement state information based on the movement state information of the device that is received from the device. For example, the movement state information that is information about a moving speed, a movement direction, an acceleration, and the like is received from a plurality of terminals. The image input recording apparatus detects a moving part in the inputted image by using an image process and obtains the moving speed of the image. The object is associated with the moving part of the image by using a difference between the moving speeds of the images, the direction, or the like and the movement state of the terminal that is received from the terminal. Whereby, the objects in the image can be discriminated.

Fig. 19A shows an example of an image analysis system using the position information. Fig. 19B is an example of the image displayed in the image input recording apparatus. The image input recording apparatus 1001 photographs the image V1 of the devices 1002, 1003, and 1004.

The devices 1002, 1003 and 1004 transmit movement state information 1012 on the devices 1002, 1003, and 1004 to the image input recording apparatus 1001, respectively. The movement state information 1012 includes the moving speed, the movement direction, the acceleration, or the like.

The image input recording apparatus 1001 can associate the objects in the image with the devices 1002, 1003, and 1004 based on the movement state information received from the devices 1002, 1003, and 1004. That is because movement modes of the devices 1002, 1003, and 1004 in the image can be determined based on the movement state information on the devices 1002, 1003 and 1004.

For example, if it is determined that the device 1002 moves most intensely among the devices 1002, 1003, and 1004 based on the movement state information on the device 1002, it can be determined that the device 1006 that moves most intensely in the image 1005 is the device 1002. Even when the devices 1002, 1003, and 1004 move in different directions such as a vertical direction, a horizontal direction, and an oblique direction, the devices 1002, 1003, and 1004 can be easily associated with the images.

When this method is used, there may be a case in which it is undesirable to photograph the image in a state in which the devices 1002, 1003, and 1004 move. In this case, before photographing the image or after photographing the image, the movement of the devices 1002, 1003, and 1004 is allowed and the object is discriminated. When the image is photographed, the devices are prohibited from moving.

### 3) Method in which comparison with registered object image is performed

By comparing the object in the photograph with the object image registered in the image recording apparatus, the object in the photograph is associated with the registered image. Whereby, the objects in the image can be discriminated.

As described above, in the image analysis system of the exemplary embodiment, the position information and the movement state information on the object are transmitted from the object side to the image input recording apparatus. The image input recording apparatus associates the image with the object based on the information obtained from the object side. Therefore, even when the plurality of objects exist, the image input recording apparatus has an effect in which the image can be easily associated with the object.

When a process is applied to the image for each object, if the exemplary embodiment is used, the image that corresponds to each object can be easily determined and the process can be applied to only the required part.

Each of the above-mentioned exemplary embodiments can be combined with the other exemplary embodiments.

The invention of the present application has been explained with reference to the exemplary embodiment described above. However, the invention of the present application is not limited to the above-mentioned exemplary embodiment. Various changes in the configuration or details of the invention of the present application that can be understood by those skilled in the art can be made without departing from the scope of the invention of the present application.

This application claims priority from Japanese Patent Application No. 2010-044951 filed on March 2nd, 2010, the contents of which are incorporation herein by reference in their entirely.

### Industrial applicability

The device cooperation system of the present invention can be applied to cooperation of an electronic device including the required means such as the input means, the recording means, the processing means, and the like for image/voice that has been explained in each exemplary embodiment. The device cooperation system of the present invention can be applied to for example, a portable telephone set, a portable phone information terminal, a PC, a camera or the like.

### Description of symbol

- 111: first information
- 112: second information
- 113: third information
- 211, 212, and 213: voice signal
- 611: guided device information
- 612: route instruction information
- 711: reference signal
- 712: image
- 811, and 812: image signal
- 911: object information signal
- 1005: image
- 1011: position information
- 1012: movement state information
- S1, S2, and S3: voice
- V1, V2, and V3: image
- L1, L2, L3, L11, L12, L21, and L22: distance
- D1 and D2: direction

## Claims

1. A device cooperation system comprising:
a first device which has a first transmission function to transmit first information; and
a second device which has a first relative relationship with the first device, has a first reception function to receive the first information, and generates third information based on the first relative relationship, the first information and second information.

2. The device cooperation system according to claim 1, wherein the first relative relationship is a distance between a position of the first device and a position of the second device.

3. The device cooperation system according to claim 2, wherein the distance is estimated by the second device based on a receiving intensity of a reference signal when the reference signal transmitted by the first device is received.

4. The device cooperation system according to claim 2, wherein the distance is estimated by the second device based on information about a size of the first device transmitted by the first device and a size of an image of the first device that is photographed by the second device.

5. The device cooperation system according to claim 1, wherein the first relative relationship is an angle between a direction of a predetermined portion of the first device and a direction of a predetermined portion of the second device.

6. The device cooperation system according to claim 1, wherein the first relative relationship is a difference between a first attribute of the first device and a second attribute of the second device.

7. A device cooperation system comprising;
a first device which has a first transmission function to transmit first information;
a second device which has a first relative relationship with the first device and has a second transmission function to transmit second information; and
a third device which has a second relative relationship with the second device, has a third relative relationship with the first device, has a first reception function to receive the first information and the second information, and generates third information based on at least one among the first relative relationship, the second relative relationship, and the third relative relationship, as well as the first information and the second information.

8. The device cooperation system according to claim 7,
wherein the first device inputs a first voice and generates the first information,
wherein the second device inputs a second voice and generates the second information, and
wherein the third device records the third information generated based on at least one among a first distance between the first device and the third device, a second distance between the second device and the third device, and a third distance between the first device and the second device, as well as the first information and the second information.

9. The device cooperation system according to claim 7,
wherein the first device inputs a first voice and generates the first information,
wherein the second device inputs a second voice and generates the second information, and
wherein the third device reproduces a third voice according to the third information generated based on at least one among a first distance between the first device and the third device, a second distance between the second device and the third device, and a third distance between the first device and the second device, as well as the first information and the second information.

10. The device cooperation system according to claim 8 or 9,
wherein the first distance is estimated by the third device based on the reception strength of the reference signal at the time of reception of the reference signal transmitted by the first device,
wherein the second distance is estimated by the third device based on the reception strength of the reference signal at the time of reception of the reference signal transmitted by the second device, and
wherein the third distance is estimated by the second device based on the reception strength of the reference signal at the time of reception of the reference signal transmitted by the first device.

11. The device cooperation system according to claim 8 or 9,
wherein the first distance is estimated by the third device based on information about a size of the first device transmitted by the first device and a size of an image of the first device that is photographed by the third device,
wherein the second distance is estimated by the third device based on information about a size of the second device transmitted by the second device and a size of an image of the second device that is photographed by the third device, and
wherein the third distance is estimated by the second device based on information about a size of the first device transmitted by the first device and a size of an image of the first device that is photographed by the second device.

12. The device cooperation system according to claim 7,
wherein the first device inputs a first image in a first direction and generates the first information,
wherein the second device inputs a second image in a second direction and generates the second information, and
wherein the third device synthesizes a third image according to the third information generated based on at least one among a distance between the first device and the third device, a distance between the second device and the third device, and a distance between the first device and the second device, as well as the difference between the first direction and the second direction, the first information, and the second information.

13. The device cooperation system according to claim 12,
wherein the time at which the first device inputs the first image is different from the time at which the second device inputs the second image.

14. The device cooperation system according to claim 12,
wherein the first device inputs the first image as a first moving image inputted in a first period including a predetermined time and generates the first information from the first moving image as a first still image at the time, and
wherein the second device inputs the second image as a second moving image inputted in a second period including the time and generates the second information from the second moving image as a second still image at the time.

15. The device cooperation system according to claim 1,
wherein the first device inputs a voice and generates the first information, and
wherein the second device inputs an image, generates the second information, and generates third information that is composite information including the information about the voice and the information about the image based on the first relative relationship, the first information, and second information.

16. The device cooperation system according to claim 1,
wherein the first device generates the first information including position information and movement state information, and
wherein the second device transmits third information generated based on the first relative relationship, the first information, and the second information to the first device.

17. The device cooperation system according to claim 1,
wherein the first device continuously transmits the first information generated from the first image being inputted to the first device to the second device, and
wherein the second device generates the third information based on at least one of the second information generated from the second image being inputted to the second device and the first information.

18. The device cooperation system according to claim 1,
wherein the first device transmits the first information about a state of the surface of the first device to the second device, and
wherein the second device generates the third information by correcting the second information that is generated after the image of the first device is inputted based on the first information.

19. The device cooperation system according to claim 1,
wherein the first device transmits the first information including position information on the first device to the second device, and
wherein the second device inputs the image in which the first device is photographed, generates the second information, discriminates the image of the first device in the image based on the position information, and generates the third information.

20. The device cooperation system according to claim 1,
wherein the first device transmits the first information including movement state information which indicates a movement state of the first device to the second device, and
wherein the second device inputs the image in which the first device is photographed, generates the second information, discriminates the image of the first device in the image based on the movement state information, and generates the third information.

21. The device cooperation system according to claim 1,
wherein the second device inputs the image in which the first device is photographed, generates the second information, discriminates the image of the first device in the image based on a result of the comparison between the image of the first device in the image and the image of the first device that is registered in advance, and generates the third information.

22. A cooperative operation device comprising;
first reception means that have a first relative relationship with a first device having a first transmission function to transmit first information and receive the first information; and
information generation means that generate third information based on the first relative relationship, the first information, and second information.

23. A cooperative operation device comprising;
first reception means that have first relative relationship with a first device having a first transmission function to transmit first information, have second relative relationship with a second device having a second transmission function to transmit second information, have third relative relationship with the first device, and receive the first information and the second information; and
information generation means that generate third information based on at least one among the first relative relationship, the second relative relationship, and the third relative relationship as well as the first information and the second information.

24. A device cooperation method comprising;
transmitting first information from a first device;
receiving the first information by using a second device having a first relative relationship with the first device; and
generating third information based on the first relative relationship, the first information, and second information.

25. A device cooperation method comprising;
transmitting first information from a first device;
transmitting second information from a second device having a first relative relationship with the first device;
receiving the first information and the second information by using a third device arranged so as to have a second relative relationship with the second device and a third relative relationship with the first device; and
generating third information based on at least one among the first relative relationship, the second relative relationship, and the third relative relationship, as well as the first information and the second information.

26. A cooperative device control program causing a computer included in a second device which has a first relative relationship with a first device that transmits first information to function as
means for receiving the first information and
means for generating third information based on the first relative relationship, the first information, and second information.

27. A cooperative device control program causing a computer included in a third device which has a second relative relationship with a first device that transmits first information, a first relative relationship with the first device, and a third relative relationship with a second device that transmits second information to function as
means for receiving the first information and the second information and
means for generating third information based on at least one among the first relative relationship, the second relative relationship, and the third relative relationship, as well as the first information and the second information.

28. A computer-readable storage medium storing the cooperative device control program described in claim 26 or 27.
